# EUROPEAN PATENT SPECIFICATION

(11) **EP 0 672 739 B1**
(45) Date of publication and mention of the grant of the patent: **03.01.2001**
(21) Application number: 93922050.5
(22) Date of filing: 07.10.1993
(51) Int. Cl.: C09K 3/00, C08F 20/36

(54) **THERMOREVERSIBLE THICKENER**
THERMOÜBERTRAGBARER EINDICKER
EPAISSISSANT THERMOREVERSIBLE

(43) Date of publication of application: 20.09.1995
(73) Proprietor: SANYO CHEMICAL INDUSTRIES, LTD., Kyoto-shi, Kyoto 605 (JP)
(72) Inventor: OHSUMI, Tatsuya, Sanyo Chemical Industries Ltd., Kyoto-shi, Kyoto 605 (JP)
(74) Representative: Coleiro, Raymond
(86) International application number: JP9301445
(87) International publication number: WO9509899

(56) References cited:
- EP-A- 0 359 349
- GB-A- 1 393 374
- GB-A- 1 482 515
- JP-A- 1 014 276
- JP-A- 2 075 682
- JP-A- 56 032 511
- JP-A- 62 057 408

## Description

This invention relates to a thermoreversible thickener, more particularly to a thermoreversible thickener which is compounded with aqueous liquids such as water, aqueous solutions of water-soluble compounds, aqueous solutions of water-soluble resins, aqueous dispersions of inorganic substances, and aqueous dispersions of organic substances such as latices and emulsions of various resins, and also to compositions compounded with the thermoreversible thickener such as coating compositions, rolling oil compositions, adhesives, printing inks, coating materials for coated papers, binders for nonwoven fabrics and adhesives for carpet backing.

Previously, methyl cellulose has been known as a thermoreversible thickener which has the characteristic that the viscosity of an aqueous liquid admixed therewith exhibits a rapid increase in viscosity above a certain transition temperature, and has been widely applied to uses such as coating compositions and printing inks. Recently EP-A-359349 has disclosed N-alkyl acrylamide polymers as thermoreversible thickeners. The acrylamide monomer may be copolymerised with various vinyl compounds, including amines such as N,N-dimethyl aminoethyl (meth)acrylate and N,N-diethyl aminoethyl (meth)acrylate. However, methyl cellulose thickeners have a disadvantage in that with aqueous compositions compounded therewith it is difficult optionally to control the temperature at which the composition begins to increase in viscosity, and that the viscosity increase thereof is not rapid even though the temperature is raised above the transition temperature. On the other hand, for the N-alkyl acryl-amide polymers, various N-alkyl acrylamides with different alkyl groups have to be prepared as starting materials in order to attain optional transition temperatures of the polymers obtained.

Other copolymers of vinylcarboxylic esters of alkylene oxide adducts of amines are disclosed in GB 1482 515 and GB 1393 374.

The present invention seeks to provide a thermoreversible thickener for aqueous liquids, with a transition temperature which can be easily controlled according to the intended application of the aqueous liquid and with such characteristics as to thicken rapidly within a narrow temperature range above the transition temperature, and to provide compositions such as coating materials and printing inks with transition temperatures which can be controlled easily and with such characteristics as to thicken rapidly within a narrow temperature range above the transition temperature.

As a result of our research into the above, we have found (a) that a water-soluble copolymer containing as constituent monomer units a vinyl carboxylic ester of an alkylene oxide adduct of a cyclic amine, or a vinyl carboxylic ester of an alkylene oxide adduct of a non-cyclic amine with at least 5 carbons, when admixed with an aqueous liquid the viscosity of which is to be controlled, causes initially a decrease in the viscosity thereof as the temperature is increased in the range below a certain transition temperature, while causing a rapid increase in the viscosity thereof at a temperature above the transition temperature, (b) that the thickening characteristic of the aqueous composition is thermoreversible, namely, the viscosity of the composition undergoes a reversible change with a change in the temperature thereof, and (c) that the transition temperature of the thermoreversible thickener can be easily controlled at optional temperatures by varying the kind and the number of moles of the alkylene oxides added in the above-mentioned esters constituting units of the copolymers, or by controlling the kinds and the copolymerization ratios of the comonomers constituting the copolymers.

Accordingly, the invention provides a water-soluble copolymer, capable of application as a thermoreversible thickener in a composition comprising the water-soluble copolymer, which water-soluble copolymer contains as constituent monomer units at least 50%, by weight of the copolymer, of a vinyl carboxylic ester of an alkylene oxide adduct of a cyclic amine, or a non-cyclic amine with at least 5 carbons; the copolymer having a thermoreversible transition temperature, below which the copolymer is capable of forming a 1% by weight aqueous solution in deionized water and above which an aqueous solution thereof exhibits a thickening effect, the transition temperature being determinable by measuring the temperature at which a 20% by weight aqueous solution of the copolymer begins to increase in viscosity as the temperature thereof is gradually increased. The invention also provides a variety of compositions admixed with the aforementioned thickener such as coating materials and printing inks containing from 0.01 to 30% by weight of the above-mentioned thermoreversible thickener. As it is used herein, the phrase "transition temperature" refers to a temperature at which the thermoreversible thickener of the invention begins to increase in viscosity as the temperature thereof is increased, namely, a temperature at which the above-mentioned copolymer exhibits a transition from hydrophilicity to hydrophobicity or, reversibly, from hydrophobicity to hydrophilicity. The transition temperature may be compared to the cloud point of nonionic surface active agents.

Best embodiments of the invention will now be described in detail by way of typical examples. First of all, materials constituting the thermoreversible thickeners of this invention are described.

Cyclic amines which may be used may include any cyclic amine with active hydrogen atoms to which alkylene oxides are added, namely, any compound with amine nitrogens inside or outside the ring. Active hydrogen may derive from amino groups or such groups as hydroxy and carboxyl groups to which alkylene oxide can be added. Examples of such cyclic amines are non-aromatic heterocyclic amines including those with an aziridine ring such as aziridine, 2-methyl aziridine and 2-ethyl aziridine, those with a pyrrolidine ring such as pyrrolidine, 2-methyl pyrrolidine, 2-ethyl pyrrolidine, 2-pyrrolidone, succinimide and 1,2-cyclohexane dicarboxylimide, those with a piperidine ring such as piperidine, 2-methyl piperidine, 3,5-dimethyl piperidine, 2-ethyl piperidine, 4-piperidino-piperidine, 2-methyl-4-pyrrolidinopiperidine and ethyl pipecolinate, those with a piperazine ring such as 1-methyl piperazine and 1-methyl-3-ethyl piperazine, those with a morpholine ring such as morpholine, 2-methyl morpholine, 3,5-dimethyl morpholine and thiomorpholine, pyrrolines such as 3-pyrroline, 2,5-dimethyl-3-pyrroline and 2-phenyl-2-pyrroline, pyrazolines such as pyrazoline, imidazoles such as 2-methyl imidazole, 2-ethyl-4-methyl imidazole and 2-phenyl imidazole, pyrazoles such as pyrazole and pyrazole carboxylic acid, pyridones such as α-pyridone and γ-pyridone, and those compounds sucn as ε-caprolactam, pyridazinone, pyridaline and pyridoine; aromatic heterocyclic amines such as 2-hydroxy pyridine, 2-hydroxy-3,5-di-tert-butyl pyridine, 2-carboxyl pyridine, 4-pyridyl carbinol, 2-hydroxypyrimidine, pyrrole and 2-phenyl pyrrole; and aromatic amines such as aniline, 3-methyl aniline, N-methyl aniline and N-isopropyl aniline.

Non-cyclic amines with at least 5 carbons as used herein may include any non-cyclic amine with at least 5 carbons with active hydrogen atoms to which alkylene oxides are added. Examples of such non-cyclic amines are primary aliphatic non-cyclic amines with at least 5 carbons such as dimethylpropyl amine, 2-ethylbutyl amine, pentyl amine, 2,2-dimethylbutyl amine, hexyl amine, cyclohexyl amine, octyl amine, 2-ethylhexyl amine, isodecyl amine and lauryl amine, and secondary aliphatic non-cyclic amines with at least 5 carbons such as methy butyl amine, methyl isobutyl amine, methyl tert-butyl amine, methyl pentyl amine, methyl hexyl amine, methyl (2-ethylhexyl) amine, methyl octyl amine, methyl nonyl amine, methyl isodecyl amine, ethyl propyl amine, ethyl isopropyl amine, ethyl butyl amine, ethyl isobutyl amine, ethyl tert-butyl amine, ethyl pentyl amine, ethyl hexyl amine, ethyl (2-ethylhexyl) amine, ethyl octyl amine, dipropyl amine, diisopropyl amine, propyl butyl amine, propyl isobutyl amine, propyl tert-butyl amine, propyl pentyl amine, propyl hexyl amine, propyl (2-ethylhexyl) amine, propyl octyl amine, isopropyl butyl amine, isopropyl isobutyl amine, isopropyl tert-butyl amine, isopropyl pentyl amine, isopropyl hexyl amine, isopropyl (2-ethylhexyl) amine, isopropyl octyl amine, dibutyl amine, diisobutyl amine, di-tert-butyl amine, butyl pentyl amine, dipentyl amine, dicyclohexyl amine.

Among such cyclic amines mentioned above, non-aromatic cyclic amines are preferable, those with a piperidine ring or morpholine ring are more preferable, and those with a morpholine ring are most preferable. Among such non-cyclic amines with at least 5 carbons primary aliphatic non-cyclic amines with 5 to 8 carbons are preferable.

Typical examples of the alkylene oxide include ethylene oxide, propylene oxide and butylene oxide, among which ethylene oxide or propylene oxide, and combinations thereof are preferable.

The transition temperature of the thickener of the invention can be easily controlled by varying the kinds and the moles of alkylene oxide added in the above-mentioned vinyl carboxylic esters. The transition temperature can be determined by measuring the temperature at which the copolymer exhibits a change from hydrophilicity to hydrophobicity or, reversibly, from hydrophobicity to hydrophilicity, for example, by measuring the temperature at which a 1% aqueous solution of a water-soluble copolymer begins clouding as the temperature thereof is gradually increased, or by measuring the temperature at which a 20% aqueous solution by weight of the copolymer begins to increase in viscosity as the temperature thereof is gradually increased.

As to the kind of alkylene oxide, when ethylene oxide is used, the transition temperature of the thickener becomes higher as the number of moles added is increased. However, when propylene oxide or butylene oxide is used, the transition temperature becomes lower as the number of moles added is increased. The number of moles of the alkylene oxide added, which is selected in accordance with the transition temperature desired, the kind of cyclic amine or non-cyclic amine with at least 5 carbons and the kind of alkylene oxide, usually ranges from 1 to 50 moles, preferably from 1 to 5 moles. Furthermore, the number of moles of alkylene oxide added to primary amines with at least 5 carbons may preferably range from 2 to 5 moles.

As to the vinyl carboxylic acids, any compound which gives vinyl carboxylic esters by reacting with alkylene oxide addition compounds may be selected, for example, (meth)acrylic acid, (iso)crotonic acid, maleic acid, fumaric acid, itaconic acid, vinyl benzoic acid, and the ester forming derivatives thereof such as acid anhydrides, acid halides and methyl esters. Among the vinyl carboxylic acids mentioned above, (meth)acrylic acid, maleic acid, vinyl benzoic acid, and the ester forming derivatives thereof may be preferable, (meth) acrylic acid and the ester forming derivatives thereof being particularly preferable.

The copolymers used in the invention include copolymers of at least two kinds of vinyl carboxylic esters derived from different members of the above-mentioned amines, and copolymers containing as constituent comonomer units vinyl monomers which are different from the above-mentioned vinyl carboxylic esters.

As the comonomer constituting units of the copolymers any copolymerizable vinyl monomer, either hydrophilic or oleophilic, may be used. Examples of hydrophilic vinyl monomers include nonionic compounds such as hydroxyethyl (meth)acrylate, diethylene glycol mono(meth)acrylate, polyethylene glycol mono(meth)acrylate, (meth)acryloyloxy polyglycerol, vinyl alcohol, allyl alcohol, (meth)acrylamide, N-methyl (meth)acryl-amide, N-methylol (meth)acrylamide, N-vinyl-2-pyrrolidone, vinyl imidazole, N-vinyl- ε-caprolactam, p-methane sulfonamide styrene, N-methylol maleimide, N-vinyl succinimide, p-aminostyrene, N-vinyl carbazole, 2-vinyl pyridine and 2-cyanoethyl(meth)acrylate; anionic compounds such as (meth)acrylic acid, maleic acid(anhydride), fumaric acid, itaconic acid, vinyl sulfonic acid, styrene sulfonic acid, vinyl benzoic acid, alkyl arylsulfosuccinic acid and (meth)acryloyl polyoxyalkylene sulfuric ester, and salts of these acids; cationic compouds such as N,N-dimethylaminoethyl (meth)acrylate, N,N-dimethylaminopropyl (meth)acrylate, N,N-diethylaminoethyl (meth)acrylate, N,N-diethylaminopropyl (meth)acrylate, N,N-dimethylaminoethyl (meth)acryl-amide and vinyl aniline, and salts of these amines; compounds with aminimide group such as 1,1,1-trimethylamine (meth)acrylimide, 1,1-dimethyl-1-ethylamine (meth)acrylimide, 1,1-dimethyl-1-(2-hydroxypropyl)amine (meth)acrylimide, 1,1-dimethyl-1-(2'-phenyl-2'-hydroxyethyl)amine (meth)acrylimide and 1,1,1-trimethylamine (meth)acrylimide.

Examples of oleophilic vinyl monomers include (meth)acrylate derivatives such as methyl (meth)acrylate, ethyl (meth)acrylate, butyl (meth)acrylate, cyclohexyl (meth)acrylate, lauryl methacrylate, octadecyl methacrylate and glycidyl (meth)acrylate, N-alkyl (meth)acrylamide derivatives such as N,N-dibutyl (meth)acrylamide and N-cyclohexyl (meth)acrylamide, (meth)acrylonitrile, styrene, 1-methyl styrene, vinyl acetate, butadiene, chlorovinyl butadiene and isoprene.

Copolymers used in embodiments of the invention and the methods for their preparation will now be described. The transition temperature of the copolymers is easily controlled by varying the kinds and the amounts of the above-mentioned comonomers. More specifically, the use of a hydrophilic vinyl monomer as comonomer induces a tendency to increase the transition temperature of the copolymer, the larger the fraction of the hydrophilic vinyl monomer the higher the transition temperature, the tendency becoming more remarkable with an increase in hydrophilicity of the hydrophilic vinyl monomer. Conversely, the use of an oleophilic vinyl monomer induces a tendency to decrease the transition temperature of the copolymer, the larger the fraction of oleophilic vinyl monomer the lower the transition temperature, the tendency becoming more remarkable with an increase in oleophilicity of the oleophilic vinyl monomer.

Usually, the copolymer should contain at least 50% by weight, preferably at least 70% by weight, of vinyl carboxylic esters as constituent monomer units. When the amount of the vinyl carboxylic ester contained in the copolymer is too small, the change in viscosity thereof with temperature is not prominent. The weight-average molecular weight of the copolymer usually ranges from 1,000 to 5,000,000, preferably from 10,000 to 2,000,000, and most preferably from 100,000 to 1,000,000.

The copolymer of the invention is prepared by the radical polymerization of the vinyl carboxylic ester with the above-mentioned comonomers according to need. The polymerization can be carried out by any of the usual thermal polymerization methods such as solution polymerization, bulk polymerization, emulsion polymerization and suspension polymerization, the copolymer being obtained by initiating the polymerization reaction by any of the methods including heating in the presence of a radical polymerization initiator, irradiation with light in the presence of a photosensitizer, or irradiation with high-energy radiation. The temperature of the polymerization reaction ranges usually from 20 to 350 °C, preferably from 50 to 150 °C, and the pressure of the reaction ranges usually from atmospheric pressure to 20 atm., preferably from atmospheric pressure to 10 atm.

The radical polymerization initiator may be those usually used for radical polymerization. Examples of the radical polymerization initiator include azo compounds such as 2,2'-azobis(dimethyl valeronitrile), 2,2'-azobis(isobutyronitrile), 4,4'-azobis(4-cyanopentanoic acid), 2,2'-azobis-(2-amidinopropane) hydrochloride, azobis(2-methyl-N-bishydroxymethyl-2-hydroxyethyl propionamide) and azobis(2-methyl-N-hydroxyethyl propionamide), and peroxide compounds such as ammonium persulfate, sodium persulfate, hydrogen peroxide, benzoyl peroxide, lauryl peroxide, tert-butyl hydroperoxide, dicumyl peroxide, di-tert-butyl peroxide and cumenehydroperoxide. Chain transfer agents such as lauryl mercaptan and mercaptoethanol may be used according to need.

The transition temperature of the copolymers may be controlled in accordance with the intended application and the compositions needed to be thickened, being usually controlled in the range from 5 to 95°C, preferably 30 to 95°C.

The thermoreversible thickener of the invention may be admixed with antioxidants, ultraviolet absorbers, water-resistance improvers, perfumes, antifoam agents and dyes according to need.

The thermoreversible thickener of the invention may be used either as pulverised solid or as a solution of arbitrary concentration. Solvents suitable for the thickener may be water, acetone, methyl ethyl keton, ethyl acetate, tetrahydrofuran, dioxane, methanol, isopropyl alcohol, acetonitrile and toluene.

The thickener of the invention, when admixed with an aqueous liquid, is useful for controlling the characteristic thermoreversible viscosity change thereof, thickening and finally gelling as the temperature is increased. The thickener of the invention can be used for controlling the viscosity of an aqueous liquid of a wide pH range, being useful for an aqueous liquid in the pH range from 3 to 12, particularly in the range from 5 to 10.

Furthermore, compositions containing the thickener of the invention and the practical application thereof will be explained. The amount of thickener in a thickened composition comprises from 0.01 to 30% by weight of the above-mentioned thickening copolymer and from 70 to 99.99% by weight of an aqueous solution, emulsion or dispersion, namely as aqueous liquid, of inorganic or organic substances. The aqueous liquid includes water, aqueous solutions of water-soluble compounds, aqueous solutions of water-soluble resins, aqueous dispersions of inorganic compounds and aqueous dispersions of organic compounds. The amounts of the thickener in the composition of the invention may be determined in accordance with the kind, the solid content and the desired viscosity of the aqueous liquid with which it is to be admixed, being usually from 0.01 to 30 parts by weight, preferably from 0.05 to 20 parts by weight on 100 parts by weight of the aqueous liquid.

The thickened composition of the invention is prepared by admixing the thickener with an aqueous liquid at a temperature below the transition temperature thereof. The transition temperature may be measured in advance with reference to the aqueous liquid to be used, as the transition temperature tends to vary with the kind and the amount of the components in the aqueous liquid such as salts, surface active agents and solvents.

Any organic compounds may be contained in the aqueous liquid. Examples of the organic compounds to be used include food additives such as ammonium carbonate and sodium alginate, perfumes such as vanillin, sugars such as glucose and cane sugar, vitamins such as vitamin B1 and vitamin C, dyes including basic dyes such as polymethine, azo, azomethine and anthraquinone dyes, acidic dyes such as metal complex dyes, and reactive dyes such as triazine and amide dyes, organic pigments such as nitroso, nitro, azo and phthalocyanine pigments, surface active agents such as nonionic surface active agents, fats and oils such as natural fats and oils, fatty acids from fats and oils, fatty acid soap and fatty acids from hydrogenated fats and oils, waxes such as paraffin wax, polyethylene wax, modified polyethylene wax and polypropylene wax, and other publicly known water-soluble low molecular-weight compounds.

Furthermore, examples of other organic compounds include natural polymers such as gelatin, starch, cellulose and natural rubber, synthetic polymers such as sodium polyacrylates, acrylamide polymers, polyvinyl alcohols, acrylic resins, alkyd resins, melamine resins, urethane resins, polyethylene oxides, polyethylene imines, urea-formaldehyde resins, cationized starch, methyl cellulose, maleic acid resins, polyvinyl pyrrolidones, SBR, NBR, epoxy resins, polyvinyl acetate, vinyl acetate-acrylic copolymers, ethylenevinyl acetate copolymers, acryl silicone resins and polyester resins, and other publicly known water-soluble or water-dispersive resins.

Examples of inorganic substances to be admixed with the aqueous liquid include dispersions of inorganic pigments such as carbon black, iron oxide, titanium oxide, zinc white, cobalt blue, calcium carbonate, chrome yellow, alumina white, zinc sulfide, vermilion, molybdenum red, clay, ultramarine and Berlin blue, and colloidal silicas, glass fibers, ceramic powders, cement, coal and talc.

As to aqueous dispersion of organic substances any dispersions, latices or emulsions of the above-mentioned organic substances are used.

Examples of the practical applications of the thickened compositions of the invention include coating material compositions, rolling oil compositions, adhesive bonding agents, printing inks, coating materials for coated papers, binders for nonwoven fabrics and adhesive for carpet backing. Furthermore, the thickened compositions of the invention may be used for textile printing sizes, oils for metals, or cosmetics, concrete, resin concrete, binders for ceramics and binders for glass fibers.

Among many applications of the compositions mentioned above, the preparation of the coating material composition of the invention is carried out usually by adding onto 100 parts of an acrylic resin emulsion, a urethane resin emulsion, an epoxy resin emulsion or SBR latex, from 20 to 300 parts of a pigment such as those described above as an inorganic or organic pigment, from 0 to 10 parts of a pigment dispersing agent such as sodium polyacrylate, other additives for aqueous coating materials such as anti-sagging agents, thickeners, antifreezing agents, anti-foaming agents, preservatives, drying agents and leveling agents, and water as it is required, the admixture then being dispersed by the use of a dispersing machine such as a ball mill, a sand mill, a high-speed disperser and a paint conditioner and made into an emulsion coating material. The coating material composition of the invention is then prepared by adding onto the emulsion coating material obtained above, which contains from 10 to 80 % of solids constituent, from 0.01 to 30% by weight of the thickener of the invention at a temperature below the transition temperature thereof, and agitating and uniformly mixing the admixture. The coating material composition thus obtained is usually applied onto substrates such as glass metals, plastics and papers by using a paint brush or a roll coater, a curtain flow coater and an applicator to provide a coating from 0.1 to 500 µm in thickness, then dried by heating at a temperature from 50 to 150°C, a good locking coating thereby being obtained.
As the coating material compositions of the invention undergoes a rapid thickening and immobilization by heating above the transition temperature thereof, skinning of the coating surface is not induced even by a rapid heat drying after having been coated, so that a coating of a good quality without apparent surface flaws such as popping caused by migration of the emulsion particles is obtainable. Furthermore, as the coating material is immobilized without a viscosity decrease by heating, sagging and flowing thereof are suppressed and a coating with a uniform thickness is obtained even when there is a temperature distribution over the coating surface.

The preparation of the rolling oil composition of the invention is carried out by admixing 100 parts of water with from 0.5 to 30 parts of fats and oils used for aqueous rolling oils such as palm oil and beef tallow, from 0.05 to 5 parts of nonionic, cationic or anionic surfactant emulsifiers, from 0.05 to 5 parts of oily substance such as fatty acids, fats and oils or hydrocarbons, from 0.05 to 5 parts of phosphorous or sulfur type extreme-pressure additives and other additives as required, emulsifying the admixture by using a homogenizing machine such as a homogenizier and a disperser, thus obtaining an aqueous emulsion. By adding onto the aqueous emulsion thus prepared from 0.01 to 30 % by weight of the thickener of the invention at a temperature below the transition temperature thereof, the rolling oil composition of the invention is obtained. By applying the rolling oil composition of the invention onto a rolling mill, the copolymer of the invention, upon contact with hot metals, separates out thereonto together with the fats and oils, the build-up thereof on the metal surface being increased and the rolling carried out smoothly.

Furthermore, the adhesive bonding agent of the invention is prepared by admixing from 70 to 99.99 parts of an aqueous solution, an emulsion or an aqueous dispersion of the desired adhesive bonding agent such as urea resin, melamine resin, phenol resin, α-olefin-maleic anhydride resin, vinyl acetate resin, acrylic resin, SBR, NBR, urethane resin, cellulosic or starch material with from 0.01 to 30 parts of the thickener of the invention at a temperature below the transition temperature thereof, adding according to need some curing agents such as melamine resin and multifunctional isocyanates, and plasticizers such as dioctyl phthalate.

The adhesive bonding agent of the invention thus obtained is used by applying from 0.1 to 1,000 µm in thickness onto one side or the both sides of substrate sheets such as wood, paper, cloth, fibers, metals, plastics, plaster-boards, bricks, earthenware and glass, followed by laminating the sheets with each other after having been heated at a temperature, for example, from 40 to 150°C, or by heating after the sheets have been laminated with each other. As the adhesive bonding agent becomes thickened and immobilized by heating, the adhesiveness thereof is increased and migration of the constituent particles is suppressed. The particles then become uniformly distributed on the adhesive interface, the adhesive force being thereby increased.

The printing inks of the invention is prepared usually by admixing from 1 to 50 parts of the above-mentioned pigments, either organic or inorganic, or dyes, from 0 to 50 parts of resins such as aqueous melamine-alkyd resin, aqueous maleic acid resin, aqueous urethane resin as a binder for the ink, from 0 to 10 parts of dispersants including nonionic dispersants such as polyvinyl alcohol, anionic dispersants such as sodium polyacrylate and cationic dispersants such as chitosan acetate, from 0 to 50 parts of surface active agents including nonionic surfactants such as polyoxyethylene nonyl phenyl ether, anionic surfactants such as sodium alkyl benzene sulfonate, cationic surfactants such as alkyl trimethyl ammonium chloride and amphoteric surfactants such as alkyl dimethyl betaine, from 0 to 50 parts of solvents including alcohols such as ethanol, ethylene glycol, glycerine and polyethylene glycol, ethers such as butyl Cellosolve and butyl Carbitol, and ketones such as acetone and methyl ethyl ketone, and other necessary additives such as antifoam agents, preservatives and pH adjusters, with such amount of water as to fix the total amount of from 70 to 99.99 parts of the admixture, adding thereonto from 0.01 to 30 parts of the thickener of the invention at a temperature below the transition temperature thereof, and by mixing uniformly with a mixing machine.

The printing ink of the invention thus obtained is used in printing the materials such as wood, paper, cloth, fibers, metals, plastics, plasterboards, bricks, earthenware and glass, either by printing the materials which have been heated up to a temperature above the transition temperature of the thickener, for example, from 40 to 150°C, or by heating the materials after having been printed at room temperature. By the heating of the materials to be printed or the heating of the printed materials, the composition of the invention becomes thickened and immobilized, thus suppressing the deep penetration of the printing ink into the printed materials, thereby more of the effective ingredients in the composition being kept fixed on the surface, enabling reduction of the amount of the ink to be used and more elaborate and delicate printing to be obtained.

The coating material for coated paper of the invention is prepared, for example, by admixing from 1 to 30 parts of resin binders used for coating material of coated paper such as SBR latex. NBR latex and acrylic resin emulsion, from 30 to 80 parts of pigments such as calcium carbonate and clay, from 0 to 10 parts of water soluble resins such as starch, from 0 to 10 parts of dispersants including nonionic dispersants such as polyvinyl alcohol, anionic dispersants such as sodium polyacrylate, cationic dispersants such as chitosan acetate, from 0 to 5 parts of surface active agents including nonionic surfactants such as polyoxyethylene nonyl phenyl ether, anionic surfactants such as sodium alkyl benzene sulfonate, cationic surfactants such as alkyl trimethylammonium chloride and amphoteric surfactants such as alkyl dimethyl betaine, and other additives such as antifoam agents, preservatives and pH adjusters, with such amount of water as to provide a total amount of from 70 to 99.99 parts of the admixture, adding thereonto from 0.01 to 30 parts of the thickener of the invention at a temperature below the transition temperature thereof, and by mixing uniformly with a mixing machine.

The coating material for coated paper thus obtained is applied onto coating substrates such as paper and cloth, either by coating the material by an amount, for example, of from 1 to 100g/m² after the material has been heated up to a temperature above the transition temperature, for example, from 40 to 150°C, or by heating the material up to the previous temperature after having been coated at room temperature. The material can be calendered under ordinary conditions after having been coated according to need. By the heating of the susbstrate to be coated or the heating of the coated susbstrate, the coating material for coated paper of the invention becomes thickened and immobilized, thus suppressing the migration of the constituent particles onto the coated surface, so that coated paper having a highly glossy surface with excellent printability being obtained.

Furthermore, as to the binder for non-woven fabrics of the invention, a composition useful for this is prepared by mixing, as the binder for non-woven fabrics, from 5 to 50 parts of resins, for example, SBR latex, NBR latex, acrylic emulsion and urethane emulsion, from 0 to 5 parts of hardeners such as melamine resin, from 0 to 1 part of the above-mentioned surface active agents, and other known additives such as antifoam agents, preservatives and pH adjusters, with such amount of water as to provide a total amount of from 70 to 99.99 parts of the admixture, adding thereonto from 0.01 to 30 parts of the thickener of the invention at a temperature below the transition temperature thereof, and by mixing uniformly with a mixing machine.

The binder for non-woven fabrics thus obtained is applied to the webs for non-woven fabrics such as those obtained from the fibers of wool, polyester, nylon, polypropylene and rayon, by the usual methods such as spray, impregnation, foaming and printing, followed by drying at a temperature from 40 to 150°C in a drying machine. During the drying process the migration of the resin particles in the composition toward the web surface is suppressed, so that the binder for non-woven fabrics is distributed uniformly from the surface into the inside of the fabric, non-woven fabrics of fluffy and good hand being thereby obtained.

The binder for non-woven fabrics metioned above can also be used for the adhesive for carpet backing. The adhesive for carpet backing is applied to sheets of fibers, obtained from fibers such as polyester, nylon, polypropylene and rayon, by the usual methods such as spray, foaming and printing, followed by heat drying at a temperature from 40 to 150 °C in a drying machine, the sheet thus prepared being used for manufacturing carpets. During the drying process migration of the resin particles in the composition toward the surface of the fiber sheet, thereby enabling carpets of good hand to be manufactured.

Embodiments of the invention will now be explained in more detail with reference to the following examples of preparation and application. In these Preparation Examples and Examples, parts are by weight.

### Preparation Example 1

A mixture of 90 parts of 2-morpholinoethyl methacrylate, a methacrylic acid ester of morpholine with 1 mole of ethylene oxide added thereto, 10 parts of methacrylic acid and 0.1 parts of 2,2'-azobis(2,4-dimethyl valeronitrile) was contained in an ampule, which was sealed after deaeration evacuation under freezing of the mixture therein. The mixture was then heated at 50°C to effect polymerization for 8 hours to obtain copolymer 1. The transition temperature of the copolymer 1 was 74°C.

### Preparation Example 2

A mixuture of 95 parts of 2-morpholinoethyl methacrylate, a methacrylic acid ester of morpholine with 1 mole of ethylene oxide added thereto, 5 parts of methacrylic acid and 0.1 part of 2,2'-azobis(2,4-dimethyl valeronitrile) was contained in an ampule, which was sealed after deaeration and evacuation under freezing of the mixture therein. The mixture was then heated at 50 °C to effect polymerization for 8 hours to obtain copolymer 2. The transition temperature of the copolymer 2 was 52°C.

### Preparation Example 3

A mixture of 90 parts of 2-morpholinopropyl acrylate, an acrylic acid ester of morpholine with 1 mole of propylene oxide added thereto, 10 parts of hydroxyethyl acrylate and 0.5 part of 2,2'-azobis(2,4-dimethyl valeronitrile) was contained in an ampule, which was sealed after deaeration and evacuation under freezing of the mixture therein. The mixture was then heated at 60°C to effect polymerization for 8 hours to obtain copolymer 3. The transition temperature of the copolymer 3 was 42°C.

### Preparation Example 4

A mixuture of 80 parts of 2-(2-piperidinoethoxy)ethyl methacrylate, a methacrylic acid ester of piperidine with 2 moles of ethylene oxide added thereto, 20 parts of N-vinyl pyrrolidone and 0.1 part of 2,2'-azobis(2,4-dimethyl valeronitrile) was contained in an ampule, which was sealed after deaeration and evacuation under freezing of the mixture therein. The mixture was then heated at 50°C to effect polymerization for 8 hours to obtain copolymer 4. The transition temperature of the copolymer 4 was 58°C.

### Preparation Example 5

A mixture of 90 parts of 2-(2-piperidinoethoxy)ethyl methacrylate, a methacrylic acid ester of piperidine with 2 moles of ethylene oxide added thereto, 10 parts of N-vinyl pyrrolidone and 0.1 part of 2,2'-azobis(2,4-dimethyl valeronitrile) was contained in an ampule, which was sealed after deaeration and evacuation under freezing of the mixture therein. The mixture was then heated at 50°C to effect polymerization for 8 hours to obtain copolymer 5. The transition temperature of the copolymer 5 was 36°C.

### Preparation Example 6

A mixture of 95 parts of an acrylic acid ester of dimethyl propylamine with 4 moles of ethylene oxide added thereto, 5 parts of methyl methacrylate and 1 part of 2,2'-azobis(2,4-dimethyl valeronitrile) was contained in an ampule, which was sealed after deaeration and evacuation under freezing of the mixture therein. The mixture was then heated at 50 °C to effect polymerization for 8 hours to obtain copolymer 6. The transition temperature of the copolymer 6 was 44°C.

### Preparation Example 7

A mixture of 98 parts of an acrylic acid ester of dimethyl propylamine with 4 moles of ethylene oxide added thereto, 2 parts of methyl methacrylate and 1 part of 2,2'-azobis(2,4-dimethyl valeronitrile) was contained in an ampule, which was sealed after deaeration and evacuation under freezing of the mixture therein. The mixture was then heated at 50 °C to effect polymerization for 8 hours to obtain copolymer 7. The transition temperature of the copolymer 7 was 58°C.

### Example 1

A uniform aqueous blend of the copolymer 1 was prepared by dissolving 20 parts thereof into 80 parts of deionized water at 20 °C. Thereafter, the viscosity change of the aqueous mixture was measured using a Brookfield-type viscometer with a ST rotor while it was being heated at a rate of temperature elevation of 2°C per minute to effect thickening thereof, and then cooled down from 80 to 60 °C at a rate of 2 °C per minute. The results are shown in Table 1. In the following tables the viscosity measurements are given in centipoise (cps). One centipoise corresponds to 1x10⁻³ Pas. in SI units.

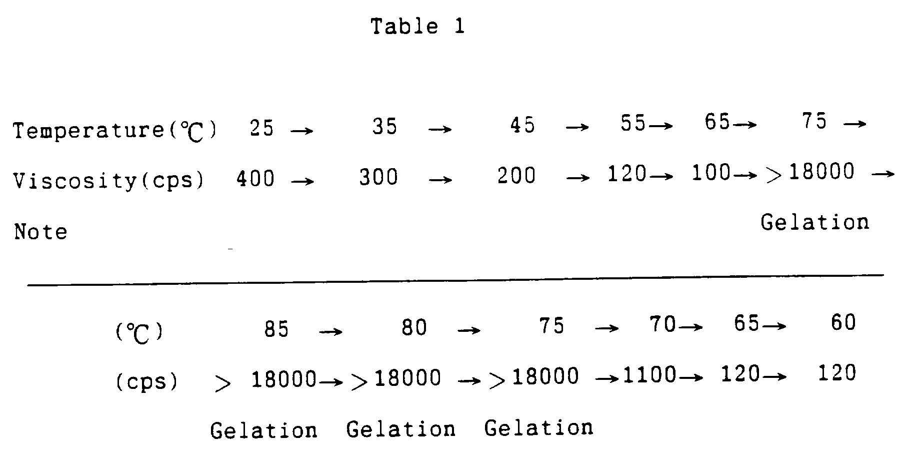

### Example 2

A uniform aqueous blend of the copolymer 2 was prepared by dissolving 20 parts thereof into 80 parts of deionized water at 20 °C. Thereafter, the viscosity change of the aqueous mixture was measured using a Brookfield-type viscometer with a ST rotor while it was being heated at a rate of temperature elevation of 2°C per minute to effect thickening thereof, and then cooled down from 60 to 40 °C at a rate of 2 °C per minute. The results are shown in Table 2.

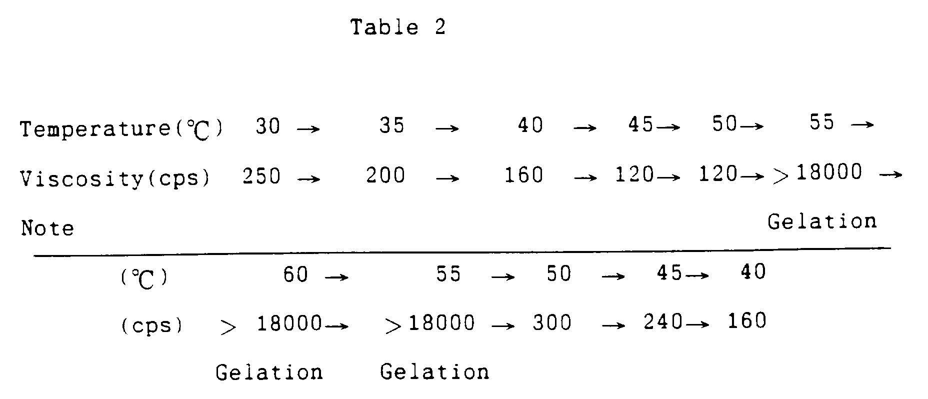

### Example 3

A uniform aqueous blend of the copolymer 3 was prepared by dissolving 20 parts thereof into 80 parts of deionized water at 20 °C. Thereafter, the viscosity change of the aqueous mixture was measured using a Brookfield-type viscometer with a ST rotor while it was being heated at a rate of temperature elevation of 2°C per minute to effect thickening thereof, and then cooled down from 50 to 30 °C at a rate of 2 °C per minute. The results are shown in Table 3.

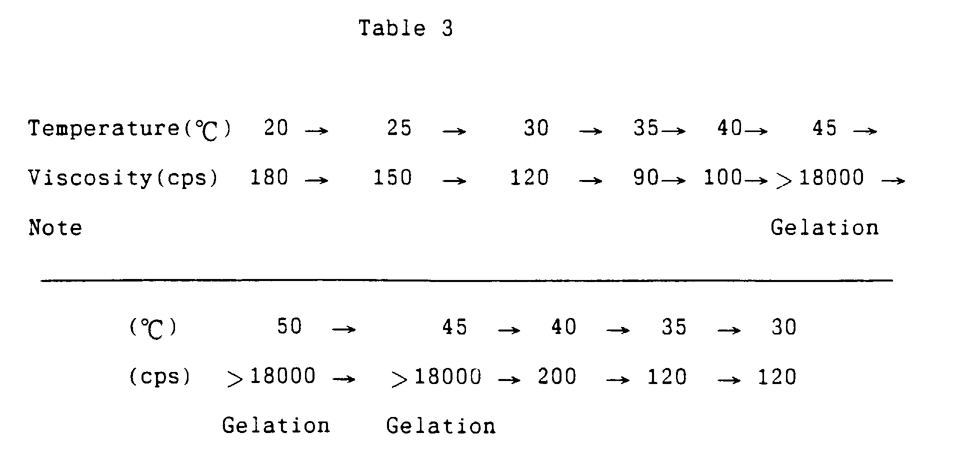

### Example 4

A uniform aqueous blend of the copolymer 4 was prepared by dissolving 20 parts thereof into 80 parts of deionized water at 20 °C. Thereafter, the viscosity change of the aqueous mixture was measured using a Brookfield-type viscometer with a ST rotor while it was being heated at a rate of temperature elevation of 2°C per minute to effect thickening thereof, and then cooled down from 65 to 45 °C at a rate of 2 °C per minute. The results are shown in Table 4.

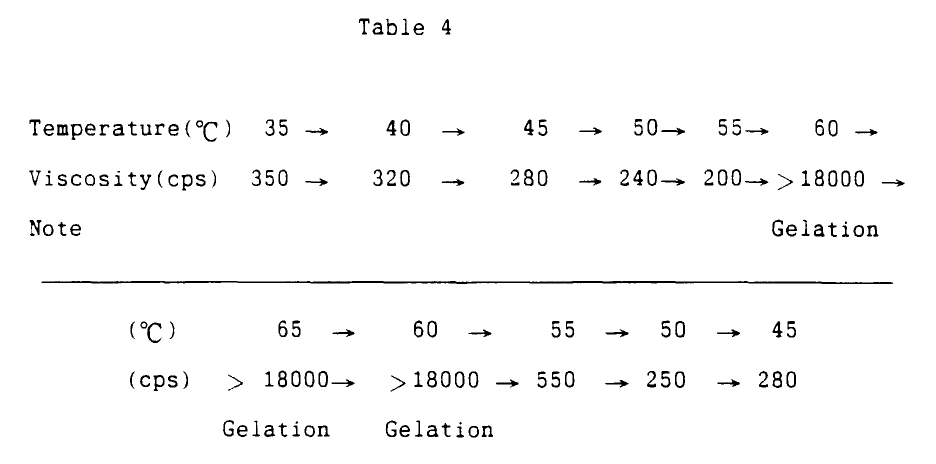

### Example 5

A uniform aqueous blend of the copolymer 5 was prepared by dissolving 20 parts thereof into 80 parts of deionized water at 20 °C. Thereafter, the viscosity change of the aqueous mixture was measured using a Brookfield-type viscometer with a ST rotor while it was being heated at a rate of temperature elevation of 2°C per minute to effect thickening thereof, and then cooled down from 45 °C to 20°C at a rate of 2 °C per minute. The results are shown in Table 5.

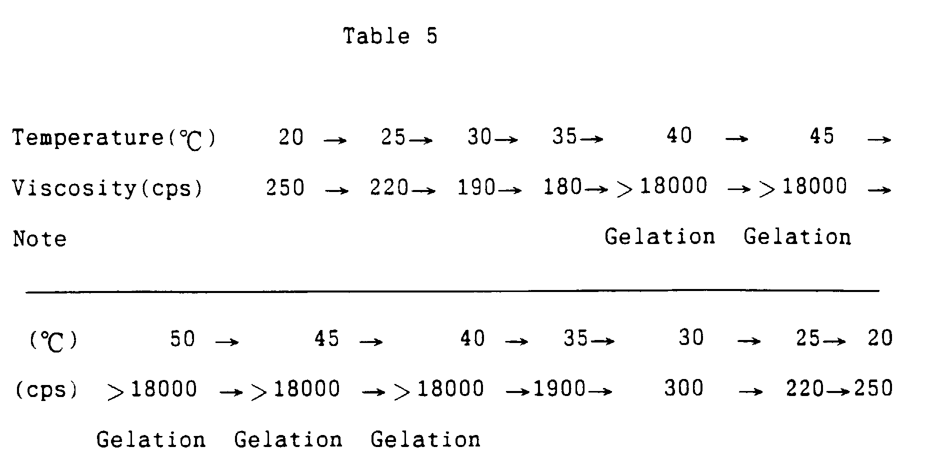

### Example 6

A uniform aqueous blend of the copolymer 6 was prepared by dissolving 20 parts thereof into 80 parts of deionized water at 20 °C. Thereafter, the viscosity change of the aqueous mixture was measured using a Brookfield-type viscometer with a ST rotor while it was being heated at a rate of temperature elevation of 2°C per minute to effect thickening thereof, and then cooled down from 55 °C to 30°C at a rate of 2 °C per minute. The results are shown in Table 6.

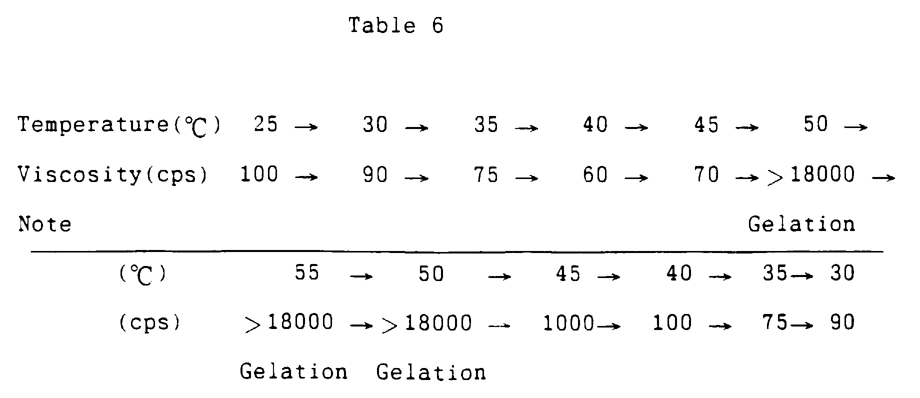

### Example 7

A uniform aqueous blend of the copolymer 7 was prepared by dissolving 20 parts thereof into 80 parts of deionized water at 20 °C. Thereafter the viscosity change of the aqueous mixture was measured using a Brookfield-type viscometer with a ST rotor while it was being heated at a rate of temperature elevation of 2°C per minute to effect thickening thereof, and then cooled down from 75 °C to 30°C at a rate of 2 °C per minute. The results are shown in Table 7.

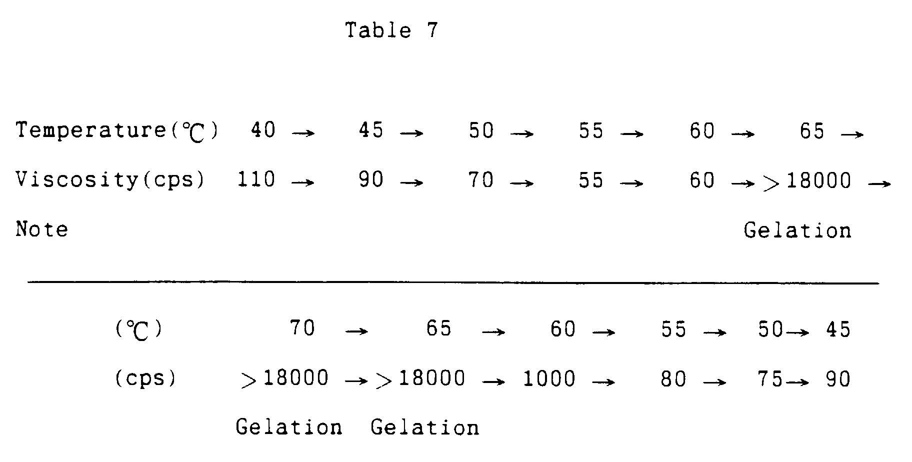

### Example 8

A blend of 99.8 parts of a urethene resin emulsion (U-Coat UX4300 manufactured by Sanyo Chemical Co., Ltd.) with a solid content of 40% and 0.2 parts of the copolymer 1 obtained in Preparation Example 1 was prepared by dissolving and uniformly mixing at 20°C. Thereafter the viscosity change of the emulsion thus obtained was measured using a Brookfield-type viscometer with a ST rotor while it was being heated at a rate of temperature elevation of 2°C per minute to effect thickening thereof, and then cooled down from 80°C to 60°C at a rate of 2 °C per minute. The results are shown in Table 8.

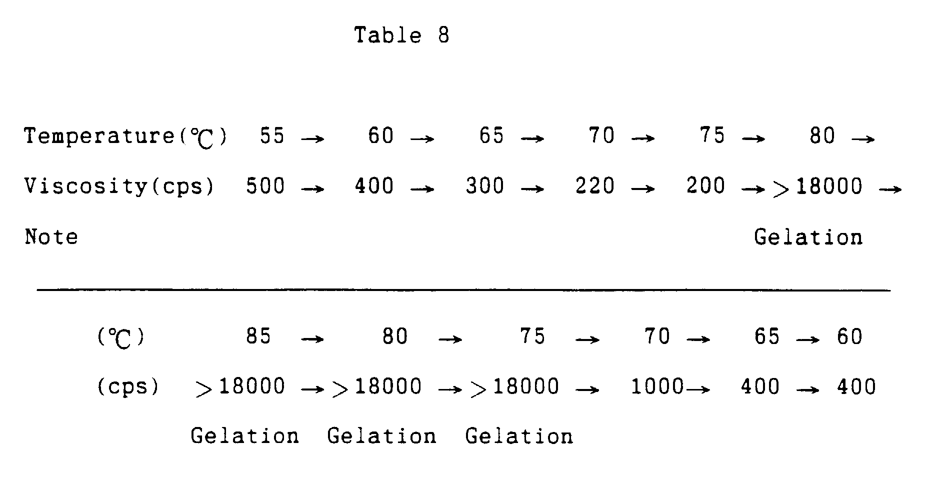

### Example 9

A blend of 99.8 parts of an acrylic resin emulsion (Primal AC-16 manufactured by Rohm & Haas Co.) with a solid content of 40% and 0.2 parts of the copolymer 4 obtained in Preparation Example 4 was prepared by dissolving and uniformly mixing at 20°C. Thereafter the viscosity change of the emulsion thus obtained was measured using a Brookfield-type viscometer with a ST rotor while it was being heated at a rate of temperature elevation of 2 °C per minute, and then cooling down from 65°C to 45°C at a rate of 2 °C per minute. The results are shown in Table 9.

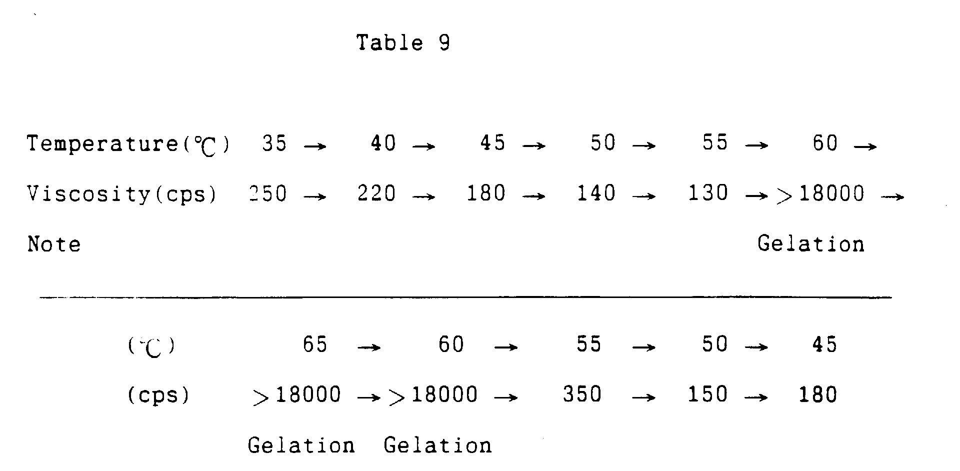

### Examples 10 and 11 and Comparative Examples 1 and 2

A white paint composition was obtained by blending 25 parts of a urethane resin emulsion containing the copolymer 1 as prepared in Example 8, 10 parts of titanium oxide, 5 parts of water and 0.1 part of sodium polyacrylate dispersant (20% aqueous solution), and by dispersing together with 80 parts of glass beads for 30 minutes using a painting conditioner (White Paint Composition 1 of Example 10). For the sake of comparison, a white paint composition was prepared in the same way as in Example 10 except that the above-mentioned urethane resin emulsion not containing the copolymer 1 was used (White Paint Composition 2 of Comparative Example 1).

In the same manner, a white paint composition was obtained by blending 25 parts of an acrylic resin emulsion containing the copolymer 4 as prepared in Example 9, 10 parts of titanium oxide, 5 parts of water and 0.1 part of sodium polyacrylate dispersant (20% aqueous solution), and by dispersing together with 80 parts of glass beads for 30 minutes using a paint conditioner (White Paint Composition 3 of Example 11). For the sake of comparison, a white paint composition was prepared in the same way as in Example 11 except that the above-mentioned acrylic resin emulsion not containing the copolymer 4 was used (White Paint Composition 4 of Comparative Example 2).

The white paint compositions 1∼4 obtained were applied each with an applicater to a glass plate by a thickness of 100 µm and, after having been kept in air for 5 minutes, dried at 130°C in a circulating hot air oven for 20 minutes. The external appearance of the coatings was subjected to a visual inspection. The results are shown in Table 10.

**Table 10**

| | White Paint Composition | Appearance of Coating ^{*1} |
|---|---|---|
| Example 10 | 1 | ○ |
| Comparative Example 1 | 2 | × |
| Example 11 | 3 | ○ |
| Comparative Example 2 | 4 | × |

| | | |
|---|---|---|
| *1 ○ ; Coating uniform without defects such as poppings × ; Coating not uniform with defects such as poppings | | |

### Possible Industrial Application

The thermoreversible thickener of the invention has a characteristic over a wide temperature range that the addition thereof to an aqueous liquid causes decrease in viscosity in the temperature range below the transition temperature, while subsequent heating causes a rapid increase in viscosity at the transition temperature, and that the viscosity change is repeated with thermoreversibility. Furthermore, the copolymer in the thickener of the invention has an advantage such that the transition temperature thereof can be controlled easily and optionally by varying the kind and the number of moles of the alkylene oxides in the vinyl carboxylic esters constituting the copolymer, the kind and the content of the monomers constituting the copolymer, and the kind and the content of the comonomers constituting the copolymer.

Accordingly, the thickener of the invention can be used in such a useful way that the addition thereof to aqueous liquids such as water, aqueous solutions of water soluble compounds, aqueous solutions of water soluble resins, aqueous dispersions of inorganic substances and aqueous dispersions of organic substances such as latices and various resin emulsions is effective in controlling the viscosity characteristics of the aqueous liquids, causing thickening and immobilization thereof with thermoreversibility, thus enabling an improvement to be attained in the performance of industrial products such as paints, coating materials, inks, adhesives, pressure sensitive adhesives, textile printing sizes, binders for non-woven fabrics, coating materials for coated paper, oils for metals, binders for cosmetics, resin mortar and cement, adhesives for carpet backing and binders for coated paper.

## Claims

1. A water-soluble copolymer containing as constituent monomer units at least 50%, by weight of the copolymer, of at least one ester of a vinyl carboxylic acid with an alkylene oxide adduct of a cyclic amine, or a non-cyclic amine with at least 5 carbons; the copolymer having a thermoreversible transition temperature, below which the copolymer is capable of forming a 1% by weight aqueous solution in deionized water and above which an aqueous solution thereof exhibits a thickening effect, the transition temperature being determinable by measuring the temperature at which a 20% by weight aqueous solution of the copolymer begins to increase in viscosity as the temperature thereof is gradually increased.

2. A water-soluble copolymer according to claim 1, wherein the said copolymer has a transition temperature of from 5°C to 95°C, preferably from 30°C to 95°C.

3. A water-soluble copolymer according to claim 1 or claim 2, wherein said adduct contains 1 to 50 moles, preferably 1 to 5 moles, of alkylene oxide, selected from the group consisting of ethylene oxide, propylene oxide and butylene oxide, preferably ethylene oxide, propylene oxide or a combination thereof.

4. A water-soluble copolymer according to any preceding claim, wherein the vinyl carboxylic acid is selected from the group consisting of (meth)acrylic, (iso)crotonic, maleic, fumaric, itaconic and vinyl benzoic acids, preferably acrylic acid or methacrylic acid.

5. A water-soluble copolymer according to any preceding claim, wherein the cyclic amine is selected from the group consisting of aziridines, pyrrolidines, piperidines, piperazines, morpholines, pyrrolines, pyrazolines, imidazoles, pyrazoles, pyridones, ε - caprolactam, pyridazinone, pyridaline, pyridoine, aromatic heterocyclic amines and aromatic amines.

6. A water-soluble copolymer according to claim 5, wherein the cyclic amine is a non-aromatic heterocyclic amine, preferably a piperidine or a morpholine, more preferably a morpholine.

7. A water-soluble copolymer according to any one of claims 1 to 4, wherein the non-cyclic amine is selected from the group consisting of dimethylpropyl amine, 2-ethylbutyl amine, pentyl amine, 2,2-dimethylbutyl amine, hexyl amine, cyclohexyl amine, octyl amine, 2-ethylhexyl amine, isodecyl amine, lauryl amine, methyl butyl amine, methyl isobutyl amine, methyl tert-butyl amine, methyl pentyl amine, methyl hexyl amine, methyl 2-ethylhexyl amine, methyl octyl amine, methyl nonyl amine, methyl isodecyl amine, ethyl propyl amine, ethyl isopropyl amine, ethyl butyl amine, ethyl isobutyl amine, ethyl tbutyl amine, ethyl pentyl amine, ethyl hexyl amine, ethyl (2-ethylhexyl) amine, ethyl octyl amine, dipropyl amine, diisopropyl amine, propyl butyl amine, propyl isobutyl amine, propyl tert-butyl amine, propyl pentyl amine, propyl hexyl amine, propyl 2-ethylhexyl amine, propyl octyl amine, isopropyl butyl amine, isopropyl iso-butyl amine, isopropyl tert-butyl amine, isopropyl pentyl amine, isopropyl hexyl amine, isopropyl 2-ethylhexyl amine, isopropyl octyl amine, dibutyl amine, diisobutyl amine, di-tert-butyl amine, butyl pentyl amine, dipentyl amine and dicyclohexyl amine.

8. A water-soluble copolymer according to claim 7, wherein the non-cyclic amine is a primary aliphatic non-cyclic amine containing from 5 to 8 carbons and said adduct contains 2 to 5 moles of alkylene oxide.

9. A water-soluble copolymer according to any preceding claim, wherein the copolymer contain as constituent monomer a comonomer selected from the group consisting of a hydrophilic vinyl monomer different from said ester, an oleophilic vinyl monomer and a combination of a hydrophilic vinyl monomer with an oleophilic vinyl monomer.

10. A water-soluble copolymer according to claim 9, wherein the comonomer is selected from the group consisting of hydroxyethyl (meth)acrylates, diethylene glycol mono(meth)acrylates, poly-ethylene glycol mono(meth)acrylates, (meth)acryloyloxy poly-glycerols, vinyl alcohol, allyl alcohol, (meth)acrylamides, N-methyl (meth)acrylamides, N-methylol (meth)acrylamides, N-vinyl-2-pyrrolidone, vinyl imidazole, N-vinyl-ε-caprolactam, p-methane sulfonamide styrene, N-methylol maleimide, N-vinyl succinimide, p-aminostyrene, N-vinyl carbazole, 2-vinylpyridine, 2-cyanoethyl (meth)acrylates, (meth)acrylic acid, maleic acid, maleic anhydride, fumaric acid, itaconic acid, vinyl sulfonic acid, styrene sulfonic acid, vinyl benzoic acid, alkyl allyl sulfosuccinic esters, (meth) acryloyl polyoxyalkylene sulfuric esters, salts of these acids, N,N-dimethylaminoethyl (meth)acrylates, N,N-dimethylaminopropyl (meth)acrylates, N,N-diethylaminoethyl (meth)acrylates, N,N-diethylaminopropyl (meth)acrylates, N,N-dimethylaminoethyl (meth)acrylamides, vinyl aniline, salts of these amines, 1,1,1-trimethylamine (meth)acryl-imides, 1,1-dimethyl-1-ethylamine (meth)acrylimides, 1,1-dimethyl-1-(2-hydroxypropyl)amine (meth)acrylimides, 1,1-dimethyl-1-(2'-phenyl-2'-hydroxyethyl)amine (meth)acrylimides, methyl(meth)acrylates, ethyl (meth)acrylates, butyl (meth)acrylates, cyclohexyl (meth)acrylates, lauryl methacrylate, octadecyl methacrylate, glycidyl (meth)acrylates, N,N-dibutyl (meth)-acrylamide, N-cyclohexyl (meth)acrylamide, (meth)acrylonitrile, styrene, 1-methylstyrene, vinyl acetate, butadiene, chlorovinyl butadiene and isoprene.

11. A water-soluble copolymer according to any preceding claim, which has a weight-average molecular weight of from 1,000 to 5,000,000 preferably from 10,000 to 2,000,000, more preferably from 100,000 to 1,000,000, and preferably contains said ester as constituent monomer in an amount of at least 70% by weight of the copolymer.

12. A composition comprising 0.01 to 30% by weight of a copolymer according to any preceding claim and from 70 to 99.99% by weight of an aqueous solution, emulsion or aqueous dispersion of an inorganic or organic substance.

13. A method of providing a thickened composition containing an aqueous medium, which method comprises mixing with the aqueous medium a water-soluble copolymer according to any one of claims 1 to 11 at a temperature below the transition temperature of the copolymer, and heating the aqueous medium to a temperature at least up to the transition temperature.

14. Use of a copolymer according to any one of claims 1 to 11, as a thickener.

15. Use according to claim 14 for thickening an aqueous solution, an emulsion or a dispersion.

16. Use according to claim 15, wherein the aqueous solution, emulsion or dispersion is a coating composition.

17. Use according to claim 15, wherein the aqueous solution, emulsion or dispersion is a rolling oil composition.

18. Use according to claim 15, wherein the aqueous solution, emulsion or dispersion is an adhesive bonding agent, preferably an adhesive for carpet backing or a binder for nonwoven fabrics.

19. Use according to claim 15, wherein the aqueous solution, emulsion or dispersion is a printing ink.

20. A method of preparing a coated paper comprising applying to a paper a coating composition comprising a composition according to claim 12.

## Patentansprüche

1. Wasserlösliches Copolymer, das als Monomerkomponente zumindest 50 Gew.-%, bezogen auf das Gewicht des Polymers, an Einheiten zumindest eines Esters einer Vinylcarbonsäure mit einem Alkylenoxidaddukt eines zyklischen Amins oder eines nicht-zyklischen Amins mit zumindest 5 Kohlenstoffatomen enthält; wobei das Copolymer eine Temperatur reversiblen Thermoübergangs aufweist, unterhalb der das Copolymer eine 1 Gew.-%-ige wässrige Lösung in entionisiertem Wasser bilden kann, und oberhalb der eine wässrige Lösung davon eindickende Wirkung zeigt, wobei die Übergangstemperatur ermittelt werden kann, indem die Temperatur gemessen wird, bei der sich die Viskosität einer 20 Gew.-%-igen wässrigen Lösung des Copolymers zu erhöhen beginnt, wenn ihre Temperatur allmählich erhöht wird.

2. Wasserlösliches Copolymer nach Anspruch 1, worin das Copolymer eine Übergangstemperatur von 5 °C bis 95 °C, vorzugsweise von 30 °C bis 95 °C, aufweist.

3. Wasserlösliches Copolymer nach Anspruch 1 oder 2, worin das Addukt 1 bis 50 Mol, vorzugsweise 1 bis 5 Mol, Alkylenoxid enthält, das aus der aus Ethylenoxid, Propylenoxid und Butylenoxid bestehenden Gruppe, vorzugsweise aus Ethylenoxid, Propylenoxid oder einer Kombination davon, ausgewählt ist.

4. Wasserlösliches Copolymer nach einem der vorangegangenen Ansprüche, worin die Vinylcarbonsäure aus der aus (Meth)acryl-, (Iso)croton-, Malein-, Fumar-, Itakon- und Vinylbenzoesäure bestehenden Gruppe, vorzugsweise aus Acrylsäure oder Methacrylsäure, ausgewählt ist.

5. Wasserlösliches Copolymer nach einem der vorangegangenen Ansprüche, worin das zyklische Amin aus der aus Aziridinen, Pyrrolidinen, Piperidinen, Piperazinen, Morpholinen, Pyrrolinen, Pyrazolinen, Imidazolen, Pyrazolen, Pyridonen, ε-Caprolactam, Pyridazinon, Pyridalin, Pyridoin, aromatischen heterozyklischen Aminen und aromatischen Aminen bestehenden Gruppe ausgewählt ist.

6. Wasserlösliches Copolymer nach Anspruch 5, worin das zyklische Amin ein nicht-aromatisches heterozyklisches Amin, vorzugsweise ein Piperidin oder Morpholin, insbesondere ein Morpholin, ist.

7. Wasserlösliches Copolymer nach einem der Ansprüche 1 bis 4, worin das nicht-zyklische Amin aus der aus Dimethylpropylamin, 2-Ethylbutylamin, Pentylamin, 2,2-Dimethylbutylamin, Hexylamin, Cyclohexylamin, Octylamin, 2-Ethylhexylamin, Isodecylamin, Laurylamin, Methylbutylamin, Methylisobutylamin, Methyl-tert-butylamin, Methylpentylamin, Methylhexylamin, Methyl-2-ethylhexylamin, Methyloctylamin, Methylnonylamin, Methylisodecylamin, Ethylpropylamin, Ethylisopropylamin, Ethylbutylamin, Ethylisobutylamin, Ethyl-tert-butylamin, Ethylpentylamin, Ethylhexylamin, Ethyl-(2-ethylhexyl)amin, Ethyloctylamin, Dipropylamin, Diisopropylamin, Propylbutylamin, Propylisobutylamin, Propyl-tert-butylamin, Propylpentylamin, Propylhexylamin, Propyl-2-ethylhexylamin, Propyloctylamin, Isopropylbutylamin, Isopropylisobutylamin, Isopropyl-tert-butylamin, Isopropylpentylamin, Isopropylhexylamin, lsopropyl-2-ethylhexylamin, Isopropyloctylamin, Dibutylamin, Diisobutylamin, Di-tert-butylamin, Butylpentylamin, Dipentylamin und Dicyclohexylamin bestehenden Gruppe ausgewählt ist.

8. Wasserlösliches Copolymer nach Anspruch 7, worin das nicht-zyklische Amin ein primäres aliphatisches nicht-zyklisches Amin ist, das 5 bis 8 Kohlenstoffatome enthält, und das Addukt 2 bis 5 Mol Alkylenoxid enthält.

9. Wasserlösliches Copolymer nach einem der vorangegangenen Ansprüche, worin das Copolymer als Monomerkomponente ein Comonomer enthält, das aus der aus einem anderen hydrophilen Vinylmonomer als dem Ester, einem oleophilen Vinylmonomer und einer Kombination aus einem hydrophilen Vinylmonomer und einem oleophilen Vinylmonomer bestehenden Gruppe ausgewählt ist.

10. Wasserlösliches Copolymer nach Anspruch 9, worin das Comonomer aus der aus Hydroxyethyl(meth)acrylaten, Diethylenglykolmono(meth)acrylaten, Polyethylenglykolmono(meth)acrylaten, (Meth)acryloyloxypolyglycerinen, Vinylalkohol, Allylalkohol, (Meth)acrylamiden, N-Methyl(meth)acrylamiden, N-Methylol(meth)acrylamiden, N-Vinyl-2-pyrrolidon, Vinylimidazol, N-Vinyl-ε-caprolactam, p-Methansulfonamidstyrol, N-Methylolmaleimid, N-Vinylsuccinimid, p-Aminostyrol, N-Vinylcarbazol, 2-Vinylpyridin, 2-Cyanoethyl(meth)acrylaten, (Meth)acrylsäure, Maleinsäure, Maleinsäureanhydrid, Fumarsäure, Itakonsäure, Vinylsulfonsäure, Styrolsulfonsäure, Vinylbenzoesäure, Alkylallylsulfobernsteinsäureestern, (Meth)acryloylpolyoxyalkylenschwefelsäureester, Salzen dieser Säuren, N,N-Dimethylaminoethyl(meth)acrylaten, N,N-Dimethylaminopropyl(meth)acrylaten, N,N-Diethylaminoethyl(meth)acrylaten, N,N-Diethylaminopropyl(meth)acrylaten, N,N-Dimethylaminoethyl(meth)acrylamiden, Vinylanilin, Salzen dieser Amine, 1,1,1-Trimethylamin(meth)acrylimiden, 1,1-Dimethyl-1-ethylamin(meth)acrylimiden, 1,1-Dimethyl-1-(2-hydroxypropyl)amin(meth)acrylimiden, 1,1-Dimethyl-1-(2'-phenyl-2'-hydroxyethyl)amin(meth)acrylimiden, Methyl(meth)acrylaten, Ethyl(meth)acrylaten, Butyl(meth)acrylaten, Cyclohexyl(meth)acrylaten, Laurylmethacrylat, Octadecylmethacrylat, Glycidyl(meth)acrylaten, N,N-Dibutyl(meth)acrylamid, N-Cyclohexyl(meth)acrylamid, (Meth)acrylnitril, Styrol, 1-Methylstyrol, Vinylacetat, Butadien, Chlorvinylbutadien und Isopren bestehenden Gruppe ausgewählt ist.

11. Wasserlösliches Copolymer nach einem der vorangegangenen Ansprüche, das ein gewichtsmittleres Molekulargewicht von 1.000 bis 5.000.000, vorzugsweise 10.000 bis 2.000.000, insbesondere 100.000 bis 1.000.000, aufweist und vorzugsweise den Ester als Monomerkomponente in einer Menge von zumindest 70 Gew.-% des Copolymers enthält.

12. Zusammensetzung, die 0,01 bis 30 Gew.-% eines Copolymers nach einem der vorangegangenen Ansprüche und 70 bis 99,99 Gew.-% einer wässrigen Lösung, Emulsion oder wässrigen Dispersion einer anorganischen oder organischen Substanz umfasst.

13. Verfahren zum Bereitstellen einer eingedickten Zusammensetzung, die ein wässriges Medium enthält, wobei das Verfahren das Vermischen eines wasserlöslichen Copolymers nach einem der Ansprüche 1 bis 11 bei einer Temperatur unterhalb der Übergangstempertur des Copolymers mit dem wässrigen Medium und das Erhitzen des wässrigen Mediums auf eine Temperatur von zumindest der Übergangstemperatur umfasst.

14. Verwendung eines Copolymers nach einem der Ansprüche 1 bis 11 als Verdicker.

15. Verwendung nach Anspruch 14 zum Eindicken einer wässrigen Lösung, einer Emulsion oder einer Dispersion.

16. Verwendung nach Anspruch 15, worin die wässrige Lösung, Emulsion oder Dispersion eine Beschichtungszusammensetzung ist.

17. Verwendung nach Anspruch 15, worin die wässrige Lösung, Emulsion oder Dispersion eine Walzenölzusammensetzung ist.

18. Verwendung nach Anspruch 15, worin die wässrige Lösung, Emulsion oder Dispersion ein Verklebemittel, vorzugsweise ein Kleber für Teppichrücken oder ein Bindemittel für Faservliese ist.

19. Verwendung nach Anspruch 15, worin die wässrige Lösung, Emulsion oder Dispersion eine Druckfarbe ist.

20. Verfahren zur Herstellung von beschichtetem Papier, welches das Aufbringen einer Beschichtungszusammensetzung, die eine Zusammensetzung nach Anspruch 12 umfasst, auf Papier umfasst.

## Revendications

1. Copolymère soluble dans l'eau contenant comme unités monomères le constituant au moins 50 %, en poids du copolymère, d'au moins un ester d'un acide vinyl carboxylique avec un produit d'addition d'oxyde d'alkylène d'une amine cyclique ou d'une amine non cyclique avec au moins 5 carbones ; le copolymère ayant une température de transition thermoréversible en dessous de laquelle le copolymère est capable de former une solution aqueuse à 1 % dans l'eau désionisée et au-dessus de laquelle sa solution aqueuse présente un effet épaississant, la température de transition pouvant être déterminée en mesurant la température à laquelle une solution aqueuse à 20 % en poids du copolymère commence à augmenter en viscosité tandis que sa température est graduellement augmentée.

2. Copolymère soluble dans l'eau selon la revendication 1, où ledit copolymère a une température de transition de 5°C à 95°C, de préférence de 30°C à 95°C.

3. Copolymère soluble dans l'eau selon la revendication 1 ou la revendication 2, où ledit produit d'addition contient 1 à 50 moles, de préférence 1 à 5 moles d'oxyde d'alkylène, sélectionné dans le groupe consistant en oxyde d'éthylène, oxyde de propylène et oxyde de butylène, de préférence de l'oxyde d'éthylène, de l'oxyde de propylène ou une combinaison de ceux-ci.

4. Copolymère soluble dans l'eau selon toute revendication précédente, où l'acide vinyl carboxylique est sélectionné dans le groupe consistant en acides (méth)acrylique, (iso)crotonique, maléïque, fumarique, itaconique et vinyl benzoïque, de préférence acide acrylique ou acide méthacrylique.

5. Copolymère soluble dans l'eau selon toute revendication précédente, où l'amine cyclique est sélectionnée dans le groupe consistant en aziridines, pyrrolidines, pipéridines, pipérazines, morpholines, pyrrolines, pyrazolines, imidazoles, pyrazoles, pyridones, ε - caprolactame, pyridazinone, pyridaline, pyridoïne, amines hétérocycliques aromatiques et amines aromatiques.

6. Copolymère soluble dans l'eau selon la revendication 5, où l'amine cyclique est une amine hétérocyclique non aromatique, de préférence une pipéridine ou une morpholine, mieux une morpholine.

7. Copolymère soluble dans l'eau selon l'une quelconque des revendications 1 à 4, où l'amine non cyclique est sélectionnée dans le groupe consistant en diméthylpropyl amine, 2-éthylbutyl amine, pentyl amine, 2,2-diméthylbutyl amine, hexyl amine, cyclohexyl amine, octyl amine, 2-éthylhexyl amine, isodécyl amine, lauryl amine, méthyl butyl amine, méthyl isobutyl amine, méthyl tert-butyl amine, méthyl pentyl amine, méthyl hexyl amine, méthyl 2-éthylhexyl amine, méthyl octyl amine, méthyl nonyl amine, méthyl isodécyl amine, éthyl propyl amine, éthyl isopropyl amine, éthyl butyl amine, éthyl isobutyl amine, éthyl tbutyl amine, éthyl pentyl amine, éthyl hexyl amine, éthyl (2-éthylhexyl) amine, éthyl octyl amine, dipropyl amine, diisopropyl amine, propyl butyl amine, propyl isobutyl amine, propyl tert-butyl amine, propyl pentyl amine, propyl hexyl amine, propyl 2-éthylhexyl amine, propyl octyl amine, isopropyl butyl amine, isopropyl iso-butyl amine, isopropyl tert-butyl amine, isopropyl pentyl amine, isopropyl hexyl amine, isopropyl 2-éthylhexyl amine, isopropyl octyl amine, dibutyl amine, diisobutyl amine, di-tert-butyl amine, butyl pentyl amine, dipentyl amine et dicyclohexyl amine.

8. Copolymère soluble dans l'eau selon la revendication 7, où l'amine non cyclique est une amine non cyclique primaire aliphatique contenant de 5 à 8 carbones et ledit produit d'addition contient 2 à 5 moles d'oxyde d'alkylène.

9. Copolymère soluble dans l'eau selon toute revendication précédente, où le copolymère contient comme monomère constituant un comonomère sélectionné dans le groupe consistant en un monomère vinylique hydrophile différent dudit ester, un monomère vinylique oléophile et une combinaison d'un monomère vinylique hydrophile avec un monomère vinylique oléophile.

10. Copolymère soluble dans l'eau selon la revendication 9, où le comonomère est sélectionné dans le groupe consistant en hydroxyéthyl (méth)acrylates, diéthylène glycol mono (méth)acrylates, polyéthylène glycol mono(méth)acrylates, (méth)acryloxyloxy polyglycerols, alccol vinylique, alcool allylique, (méth)acrylamides, N-méthyl (méth)acrylamides, N-méthylol (meth)acrylamides, N-vinyl-2-pyrrolidone, vinyl imidazole, N-vinyl-ε-caprolactame, p-méthane sulfonamide styrène, N-méthylol maléimide, N-vinylsuccinimide, p-aminostyrène, N-vinyl carbazole, 2-vinyl-pyridine, 2-cyanoéthyl (méth)acrylates, acide (méth)acrylique, acide maléique, anhydride maléique, acide fumarique, acide itaconique, acide vinyl sulfonique, acide styrène sulfonique, acide vinyl benzoique, esters alkyl allyl sulfosucciniques, esters (méth) acryloyl polyoxyalkylène sulfurique, sels de ces acides, N,N-diméthylaminoéthyl (méth)acrylates, N,N-diméthylaminopropyl (méth)acrylates, N,N-diéthylaminoéthyl (méth)acrylates, N,N-diéthylaminopropyl (méth)acrylates, N,N-diméthylaminoéthyl (méth) acrylamides, vinyl aniline, sels de ces amines, 1,1,1-triméthylamine (méth)acrylimides, 1,1-diméthyl-1-éthylamine (méth)acrylimides, 1,1-diméthyl-1-(2-hydroxypropyl)amine (méth)acrylimides, 1,1-diméthyl-1-(2'-phényl-2'-hydroxyéthyl)amine (méth)acrylimides, (meth) acrylates de méthyle) (méth)acrylates d'éthyle), (méth)acrylates de butyle, (méth)acrylates de cyclohexyle, méthacrylate de lauryle, méthacrylate d'octadécyle, (méth)acrylates de glycidyle, N,N-dibutyl (méth)-acrylamide, N-cyclohexyl (méth)acrylamide, (méth)-acrylonitrile, styrène, 1-méthylstyrène, acétate de vinyle, butadiène, chlorovinyl butadiène et isoprène.

11. Copolymère soluble dans l'eau selon toute revendication précédente, qui a un poids moléculaire moyen en poids de 1000 à 5 000 000, de préférence de 10 000 à 2 000 000, mieux de 100 000 à 1 000 000 et contient de préférence ledit ester comme monomère constituant en une quantité d'au moins 70 % en poids du copolymère.

12. Composition comprenant 0,01 à 30 % en poids d'un copolymère selon toute revendication précédente, et de 70 à 99,99 % en poids d'une solution aqueuse, émulsion ou dispersion aqueuse d'une substance inorganique ou organique.

13. Méthode de production d'une composition épaissie contenant un milieu aqueux, laquelle méthode comprend le mélange, avec le milieu aqueux, d'un copolymère soluble dans l'eau selon l'une quelconque des revendications 1 à 11 à une température en dessous de la température de transition de copolymère et le chauffage du milieu aqueux à une température atteignant au moins la température de transition.

14. Utilisation d'un copolymère selon l'une quelconque des revendications 1 à 11 comme épaississant.

15. Utilisation selon la revendication 14 pour épaissir une solution aqueuse, une émulsion ou une dispersion.

16. Utilisation selon la revendication 15, où la solution aqueuse, émulsion ou dispersion est une composition de revêtement.

17. Utilisation selon la revendication 15, où la solution aqueuse, émulsion ou dispersion est une composition d'huile de roulement.

18. Utilisation selon la revendication 15, où la solution aqueuse, émulsion ou dispersion est un agent de liaison adhésif, de préférence un adhésif pour dessous de tapis ou un liant pour des étoffes non tissées.

19. Utilisation selon la revendication 15, où la solution aqueuse, émulsion ou dispersion est une encre d'impression.

20. Méthode de préparation d'un papier couché consistant à appliquer, à un papier, une composition de revêtement comprenant une composition selon la revendication 12.
